(19) Europäisches Patentamt
European Patent Office
Office européen des brevets

(11) **EP 3 045 554 B1**

(12) **EUROPEAN PATENT SPECIFICATION**

(45) Date of publication and mention of the grant of the patent:
**18.04.2018 Bulletin 2018/16**

(21) Application number: **13893638.0**

(22) Date of filing: **10.09.2013**

(51) Int Cl.:
*C22C 38/00* (2006.01)    *B21D 22/20* (2006.01)
*C21D 1/18* (2006.01)    *C21D 9/00* (2006.01)
*C22C 38/60* (2006.01)    *C21D 9/46* (2006.01)
*C21D 6/00* (2006.01)    *C21D 7/13* (2006.01)
*C21D 8/00* (2006.01)    *C22C 38/02* (2006.01)
*C22C 38/04* (2006.01)    *C22C 38/06* (2006.01)
*C22C 38/12* (2006.01)    *C22C 38/14* (2006.01)
*C21D 1/20* (2006.01)    *B32B 15/01* (2006.01)
*B21D 22/02* (2006.01)    *C21D 1/673* (2006.01)

(86) International application number:
**PCT/JP2013/074427**

(87) International publication number:
**WO 2015/037061 (19.03.2015 Gazette 2015/11)**

(54) **HOT-PRESSING STEEL PLATE, PRESS-MOLDED ARTICLE, AND METHOD FOR MANUFACTURING PRESS-MOLDED ARTICLE**

STAHLPLATTE ZUR HEISSPRESSUNG, PRESSGEFORMTER ARTIKEL UND VERFAHREN ZUR HERSTELLUNG DES PRESSGEFORMTEN ARTIKELS

TÔLE D'ACIER POUR FORMAGE À CHAUD À LA PRESSE, ARTICLE MOULÉ À LA PRESSE ET PROCÉDÉ DE FABRICATION D'UN ARTICLE MOULÉ À LA PRESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.07.2016 Bulletin 2016/29**

(73) Proprietor: **Kabushiki Kaisha Kobe Seiko Sho (Kobe Steel, Ltd.)**
**Kobe-shi, Hyogo 651-8585 (JP)**

(72) Inventors:
• **MURAKAMI, Toshio**
**Hyogo 651-2271 (JP)**
• **NAITOU, Junya**
**Hyogo 651-2271 (JP)**
• **OKITA, Keisuke**
**Hyogo 651-2271 (JP)**

• **IKEDA, Shushi**
**Aichi 451-0045 (JP)**

(74) Representative: **Müller-Boré & Partner**
**Patentanwälte PartG mbB**
**Friedenheimer Brücke 21**
**80639 München (DE)**

(56) References cited:
EP-A1- 1 642 991      EP-A1- 2 824 195
EP-A1- 2 824 209      EP-A1- 2 826 880
WO-A1-2012/169639    WO-A1-2012/169639
WO-A1-2012/169640    WO-A1-2012/169640
WO-A1-2013/105633    JP-A- 2006 183 139
JP-A- 2009 061 473    JP-A- 2010 043 323
JP-A- 2013 185 248

**Description**

TECHNICAL FIELD

The present invention relates to a steel sheet for hot-pressing to be used for an automotive structural component and suitable for hot-press forming, a press-formed article obtained from the steel sheet for hot-pressing, and a method for manufacturing a press-formed article. More specifically, the present invention relates to a steel sheet for hot-pressing which is useful, when forming a previously heated steel sheet (blank) into a predetennined shape, for the application to a hot-press forming method of imparting a shape, and applying a heat treatment to obtain a predetermined strength, a press-formed article, and a method useful for the manufacture of such a press-formed article.

BACKGROUND ART

As one of the measures for automotive fuel economy improvement triggered by global environmental problems, weight saving of a vehicle body is proceeding, and in turn, the strength of a steel sheet used for automobiles must be increased as much as possible. On the other hand, when the strength of a steel sheet is increased, the shape accuracy during press forming decreases.

For this reason, a component (press-formed article) is manufactured by employing a hot-press forming method where a steel sheet is heated to a given temperature (e.g., a temperature for forming an austenite phase) to lower the strength and then formed with a mold at a temperature (e.g., room temperature) lower than that of the steel sheet to impart a shape and, perform rapid-cooling heat treatment (quenching) by making use of a temperature difference therebetween so as to ensure the strength after forming. Such a hot-press forming method is referred to by various names such as hot forming method, hot stamping method, hot stamp method and die quenching method, in addition to hot-pressing method.

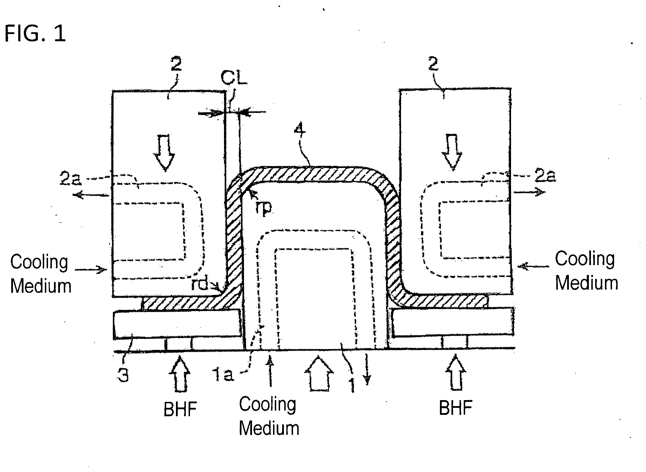

FIG. 1 is a schematic explanatory view showing the mold configuration for carrying out the above-described hot-press forming. In FIG. 1, 1 is a punch, 2 is a die, 3 is a blank holder, 4 is a steel sheet (blank), BHF is a blank holding force, rp is a punch shoulder radius, rd is a die shoulder radius, and CL is a punch-to-die clearance. Of these parts, the punch 1 and the die 2 are configured such that passages 1a and 2a allowing for passing of a cooling medium (e.g., water) are formed in respective insides and the parts are cooled by passing a cooling medium through the passage.

When hot-press forming (for example, hot deep drawing) is performed using such a mold, the forming is started in a state where the steel sheet (blank) 4 is softened by heating at a two-phase zone temperature of ($Ac_1$ transformation point to $Ac_3$ transformation point) or a single-phase zone temperature equal to or more than $Ac_3$ transformation point. More specifically, in the state of the steel sheet 4 at a high temperature being sandwiched between the die 2 and the blank holder 3, the steel sheet 4 is pushed into a hole of the die 2 (between 2 and 2 in FIG. 1) by the punch 1 and formed into a shape corresponding to the outer shape of the punch 1 while reducing the outer diameter of the steel sheet 4. In addition, heat is removed from the steel sheet 4 to the mold (the punch 1 and the die 2) by cooling the punch and the die in parallel with forming, and quenching of the material (steel sheet) is carried out by further holding and cooling the steel sheet at the forming bottom dead center (the point when the punch head is positioned at the deepest part: the state shown in FIG. 1). By carrying out such a forming method, a formed article of 1500 MPa class can be obtained with high dimensional accuracy and moreover, the forming load can be reduced as compared with a case of forming a component of the same strength class by cold working, so that the volume required of the pressing machine can be small.

As the steel sheet for hot-pressing which is widely used at present, a steel sheet using 22MnB5 steel as the material is known. This steel sheet has a tensile strength of 1,500 MPa and an elongation of approximately from 6 to 8% and is applied to an impact-resistant member (a member that undergoes as little a deformation as possible at the time of collision and is not fractured). However, its application to a component requiring a deformation, such as energy-absorbing member, is difficult because of low elongation (ductility).

As the steel sheet for hot-pressing which exerts good elongation, the techniques of, for example, Patent Documents 1 to 6 have also been proposed. In these techniques, the carbon content in the steel sheet is set in various ranges to adjust the fundamental strength class of respective steel sheets, and the elongation is enhanced by introducing a ferrite having high deformability and reducing the average particle diameters of ferrite and martensite. The techniques above are effective in enhancing the elongation but in view of elongation enhancement according to the strength of the steel sheet, it is still insufficient. For example, the elongation EL of a steel sheet having a tensile strength TS of 1,470 MPa or more is about 10.2% at the maximum, and further improvement is demanded.

On the other hand, a formed article of a low strength class as compared with hot-stamp formed articles which have been heretofore studied, for example, a formed article having a tensile strength TS of 980 MPa class or 1,180 MPa class, also has a problem with the forming accuracy in the cold pressing, and as an improvement measure thereof, there is a need for low-strength hot pressing. In this case, the energy absorption properties in a formed article must be greatly improved.

Particularly, in recent years, a technique for differentiating the strength within a single component is being developed. As such a technique, a technique of imparting high strength to a site that must be prevented from deforming (high strength side: impact resistant site-side) and imparting low strength and high ductility to a site that must absorb energy (low strength side: energy absorption site-side) has been proposed. For example, in a passenger car of middle or higher class, both functional sites of impact resistance and energy absorption are sometimes provided in a component of B-pillar or rear side member by taking into account the compatibility at the time of side collision and rear collision (a function of protecting also the counterpart side when involved in a collision with a small car). For manufacturing such a member, there have been proposed, for example, (a) a method where a steel sheet having low strength even when heated/mold quenched at the same temperature is joined to a normal steel sheet for hot-pressing (tailored weld blank: TWB), (b) a method where the cooling rate in the mold is differentiated to create a difference in the strength among respective regions of a steel sheet, (c) a method where a difference in the heating temperature is created among respective regions of a steel sheet to differentiate the strength.

In these techniques, a tensile strength of 1,500 MPa class is achieved on the high strength side (impact resistant site-side), but the low strength side (energy absorption site-side) stays at a maximum tensile strength of 700 MPa and an elongation EL of about 17% and in order to further improve the energy absorption properties, it is required to realize higher strength and higher ductility.

In addition, in order to realize a complicated shape by hot stamping, applicability to an approach of performing press forming at room temperature to create a shape to a certain degree and then performing hot stamping is required, or since a steel sheet for use in press forming of hot stamping is cut out, the strength of a steel sheet for hot-stamping is also required not to be excessively high.

RELATED ART

PATENT DOCUMENT

Patent Document 1: JP-A-2010-65292
Patent Document 2: JP-A-2010-65293
Patent Document 3: JP-A-2010-65294
Patent Document 4: JP-A-2010-65295
Patent Document 5: WO2012/169639
Patent Document 6: WO2012/169640

SUMMARY OF THE INVENTION

PROBLEMS THAT THE INVENTION IS TO SOLVE

The present invention has been made under these circumstances, and an object thereof is to provide a steel sheet for hot-pressing which makes it possible to easily conduct forming or working before hot pressing, obtain a press-formed article capable of achieving a high-level balance between high strength and elongation when uniform properties are required in a formed article, achieve a high-level balance between high strength and elongation according to respective regions when regions corresponding to an impact resistant site and an energy absorption site are required in a single formed article; a press-formed article exerting the above-described properties; and a method useful for manufacturing such a press-formed article.

MEANS FOR SOLVING THE PROBLEMS

The steel sheet for hot-pressing in the present invention, which can attain the object above, contains:

C: from 0.15 to 0.5% (mass%; hereinafter, the same applies to the chemical component composition),
Si: from 0.2 to 3%,
Mn: from 0.5 to 3%,
P: 0.05% or less (exclusive of 0%),
S: 0.05% or less (exclusive of 0%),
Al: from 0.01 to 1%,
B: from 0.0002 to 0.01 %,
Ti: equal to or more than 3.4[N]+0.01% and equal to or less than 3.4[N]+0.1% (wherein [N] indicates a content (mass%) ofN), and

N: from 0.001 to 0.01%, with the remainder being iron and unavoidable impurities, in which an average equivalent-circle diameter of a Ti-containing precipitate having an equivalent-circle diameter of 30 nm or less among Ti-containing precipitates contained in the steel sheet is 3 nm or more, a precipitated Ti amount and a total Ti amount in a steel satisfy a relationship of the following formula (1), and a ferrite fraction in a metal microstructure is 30 area% or more. Here, the "equivalent-circle diameter" is the diameter of a circle having the same area as the size (area) of a Ti-containing precipitate (e.g., TiC) when the precipitate is converted to a circle ("the average equivalent-circle diameter" is the average value thereof).

$$\text{Precipitated Ti amount (mass\%)} - 3.4[N] \geq 0.5 \times [(\text{total Ti amount (mass\%)}) - 3.4[N]] \cdots (1)$$

(in the formula (1), [N] indicates the content (mass%) of N in the steel).

In the steel sheet for hot-pressing in the present invention, it is also useful to contain, as the other element(s), at least one of the following (a) to (c), if desired. The properties of the press-formed article are further improved according to the kind of the element that is contained according to need.

(a) One or more kinds selected from the group consisting of V, Nb and Zr, in an amount of 0.1% or less (exclusive of 0%) in total
(b) One or more kinds selected from the group consisting of Cu, Ni, Cr and Mo, in an amount of 1% or less (exclusive of 0%) in total
(c) One or more kinds selected from the group consisting of Mg, Ca and REM, in an amount of 0.01% or less (exclusive of 0%) in total

In the method for manufacturing a press-formed article in the present invention, which can attain the object above, the steel sheet for hot-pressing in the present invention is heated at a temperature equal to or more than $Ac_1$ transformation point+20°C and equal to or less than $Ac_3$ transformation point-20°C, then press forming of the steel sheet is started, and the steel sheet is cooled to a temperature equal to or less than a temperature 100°C below a bainite transformation starting temperature Bs while ensuring an average cooling rate of 20°C/sec or more in a mold during forming and after a completion of forming.

In the press-formed article in the present invention, the metal microstructure in the press-formed article includes retained austenite: from 3 to 20 area%, ferrite: from 30 to 80 area%, bainitic ferrite: less than 30 area% (exclusive of 0 area%), and martensite: 31 area% or less (exclusive of 0 area%), and an average equivalent-circle diameter of a Ti-containing precipitate having an equivalent-circle diameter of 30 nm or less among Ti-containing precipitates contained in the press-formed article is 3 nm or more, a carbon amount in the retained austenite is 0.50% or more, and a high-level balance between high strength and elongation can be achieved as uniform properties in the press-formed article.

On the other hand, in another method for manufacturing a press-formed article in the present invention, which can attain the object above, the above steel sheet for hot-pressing is used, a heating region of the steel sheet is divided into at least two regions, one region of them is heated at a temperature of $Ac_3$ transformation point or more and 950°C or less, another region of them is heated at a temperature equal to or more than $Ac_1$ transformation point+20°C and equal to or less than $Ac_3$ transformation point-20°C, then press forming of both regions is started, and the steel sheet is cooled to a temperature equal to or less than a martensite transformation starting temperature Ms while ensuring an average cooling rate of 20°C/sec or more in a mold in both of the regions during forming and after a completion of forming.

Another press-formed article in the present invention is a press-formed article of a steel sheet having the chemical component composition above, and the press-formed article has a first region having a metal microstructure including retained austenite: from 3 to 20 area% and martensite: 80 area% or more and a second region having a metal microstructure including retained austenite: from 3 to 20 area%, ferrite: from 30 to 80 area%, bainitic ferrite: less than 30 area% (exclusive of 0 area%), and martensite: 31 area% or less (exclusive of 0 area%), and the carbon amount in the retained austenaite in the second region is 0.50% or more. In this press-formed article, a high-level balance between high strength and elongation can be achieved depending on respective regions, and regions corresponding to an impact resistant site and an energy absorption site are present in a single formed article.

ADVANTAGE OF THE INVENTION

According to the present invention, a steel sheet where the chemical component composition is strictly specified and the size of the Ti-containing precipitate is controlled, and where the precipitation rate of Ti not forming TiN is controlled, and as to the metal microstructure, the ratio of ferrite is adjusted, is used, so that by hot-pressing the steel sheet under predetermined conditions, the strength-elongation balance of the press-formed article can be made to be a high-level balance. In addition, when hot-pressing is performed under different conditions among a plurality of regions, an impact resistant site and an energy absorption site can be formed in a single formed article, and a high-level balance between high strength and elongation can be achieved in respective sites.

BRIEF DESCRIPTION OF THE DRAWINGS

[FIG. 1] A schematic explanatory view showing the mold configuration for carrying out hot-press forming.

MODE FOR CARRYING OUT THE INVENTION

The present inventors have made studies from various aspects to realize a steel sheet for hot-pressing which ensures that, in the manufacture of a press-formed article by heating a steel sheet at a predetermined temperature and then hot-press forming the steel sheet, a press-formed article exhibiting good ductility (elongation) is obtained while assuring high strength after press forming.

As a result, it has been found that when the chemical component composition of the steel sheet for hot-pressing is strictly specified and the size of the Ti-containing precipitate as well as the precipitated Ti amount are controlled and when a proper metal microstructure is created and the steel sheet is hot-press formed under predetermined conditions, a predetermined amount of retained austenite is ensured after forming and a press-formed article having increased intrinsic ductility (residual ductility) is obtained. The present invention has been accomplished based on this finding.

In the steel sheet for hot-pressing in the present invention, the chemical component composition needs to be strictly specified, and the reason for limiting the range of each chemical component is as follows.

(C: from 0.15 to 0.5%)

C is an important element in achieving a high-level balance between high strength and elongation when uniform properties are required in a press-formed article, or in ensuring retained austenite particularly in the low strength/high ductility site when regions corresponding to an impact resistant site and an energy absorption site are required in a single formed article. In addition, C is enriched into austenite during heating in the hot press forming, so that retained austenite can be formed after quenching. Furthermore, this element contributes to increasing the amount of martensite and increases the strength. In order to exert such effects, the C content must be 0.15% or more.

However, if the C content is too large and exceeds 0.5%, the two-phase zone heating region becomes narrow, and when uniform properties are required in a formed article, the balance between high strength and elongation is not achieved at a high level, or when regions corresponding to an impact resistant site and an energy absorption site are required in a single formed article, adjustment to a metal microstructure (microstructure where predetermined amounts of ferrite, bainitic ferrite and martensite are ensured) targeted particularly in the low strength/high ductility site is difficult. The lower limit of the C content is preferably 0.17% or more (more preferably 0.20% or more), and the upper limit is preferably 0.45% or less (more preferably 0.40% or less).

(Si: from 0.2 to 3%)

Si exerts an effect of forming retained austenite by preventing martensite from being tempered during cooling of mold quenching to form cementite or by suppressing decomposition of untransformed austenite. In order to exert such an effect, the Si content must be 0.2% or more. If the Si content is too large and exceeds 3%, solid-solution hardening amount is excessively large, and the ductility is greatly reduced. The lower limit of the Si content is preferably 0.5% or more (more preferably 1.0% or more), and the upper limit is preferably 2.5% or less (more preferably 2.0% or less).

(Mn: from 0.5 to 3%)

Mn is an element effective in enhancing the hardenability during quenching and suppressing the formation of a microstructure (e.g., ferrite, pearlite, bainite) other than martensite and retained austenite during cooling of mold quenching. In addition, Mn is an element capable of stabilizing austenite and is an element contributing to an increase in the retained austenite amount. In order to exert such effects, Mn must be contained in an amount of 0.5% or more. In the case of considering only the properties, the Mn content is preferably larger, but since the cost of alloying addition rises, the upper limit is set to 3% or less. The lower limit of the Mn content is preferably 0.7% or more (more preferably 1.0% or more), and the upper limit is preferably 2.5% or less (more preferably 2.0% or less).

(P: 0.05% or less (exclusive of 0%))

P is an element unavoidably contained in the steel but deteriorates the ductility and therefore, the P content is preferably reduced as much as possible. However, an extreme reduction causes an increase in the steelmaking cost, and it is difficult in terms of manufacture to reduce the content to 0%. For this reason, the upper limit is set to 0.05% or less (exclusive of 0%). The upper limit of the P content is preferably 0.045% or less (more preferably 0.040% or less).

(S: 0.05% or less (exclusive of 0%))

S is an element unavoidably contained in the steel, as with P, and deteriorates the ductility and therefore, the S content is preferably reduced as much as possible. However, an extreme reduction causes an increase in the steelmaking cost, and it is difficult in terms of manufacture to reduce the content to 0%. For this reason, the upper limit is set to 0.05% or less (exclusive of 0%). The upper limit of the S content is preferably 0.045% or less (more preferably 0.040% or less).

(Al: from 0.01 to 1 %)

Al is useful as a deoxidizing element and allows the solute N present in the steel to be fixed as AlN, which is useful in enhancing the ductility. In order to effectively exert such an effect, the Al content must be 0.01% or more. However, if the Al content is too large and exceeds 1%, $Al_2O_3$ is excessively produced to deteriorate the ductility. The lower limit of the Al content is preferably 0.02% or more (more preferably 0.03% or more), and the upper limit is preferably 0.8% or less (more preferably 0.6% or less).

(B: from 0.0002 to 0.01%)

B is an element having an action of suppressing ferrite transformation, pearlite transformation and bainite transformation on the high strength site-side and therefore, contributes to preventing the formation of ferrite, pearlite and bainite during cooling after heating at a two-phase zone temperature of ($Ac_1$ transformation point to $Ac_3$ transformation point), and ensuring retained austenite. In order to exert such effects, B must be contained in an amount of 0.0002% or more, but even when this element is contained excessively over 0.01%, the effects are saturated. The lower limit of the B content is preferably 0.0003% or more (more preferably 0.0005% or more), and the upper limit is preferably 0.008% or less (more preferably 0.005% or less).

(Ti: equal to or more than 3.4[N]+0.01% and equal to or less than 3.4[N]+0.1%: [N] is the content (mass%) of N)

Ti exerts an effect of improving the hardenability during quenching by fixing N and maintaining B in a solid solution state. In order to exert such an effect, it is important to contain this element in an amount larger than the stoichiometric ratio of Ti and N (3.4 times the N content) by 0.01% or more. However, if the Ti content is too large and exceeds 3.4[N]+0.1%, the Ti-containing precipitate (for example, TiN) to be formed is finely dispersed and impedes growth in the longitudinal direction of martensite formed into a lath shape during cooling after heating to the austenite region, resulting in a lath microstructure having a small aspect ratio. Conversely, when the precipitate is sufficiently large, a martensite microstructure having a large aspect ratio is produced, and stable retained austenite is obtained even with the same C amount in retained austenite, and as a result, the property (elongation) is enhanced. The lower limit of the Ti content is preferably 3.4[N]+0.02% or more (more preferably 3.4[N]+0.05% or more), and the upper limit is preferably 3.4[N]+0.09% or less (more preferably 3.4[N]+0.08% or less).

(N: from 0.001 to 0.01 %)

N decreases the effect of improving the hardenability during quenching by fixing B as BN and therefore, the content thereof is preferably reduced as much as possible, but since the reduction in an actual process is limited, the lower limit is set to 0.001%. If the N content is too large, the ductility deteriorates due to strain aging, and this elements precipitates as BN, leading to reduction of effect of improving the hardenability during quenching by solute B. For this reason, the upper limit is set to 0.01%. The upper limit of the N content is preferably 0.008% or less (more preferably 0.006% or less).

The basic chemical components in the steel sheet for hot-pressing in the present invention are as described above, and the remainder is iron and unavoidable impurities (e.g., O, H) other than P, S and N. In the steel sheet for hot-pressing in the present invention, it is also useful to further contain at least one of the following (a) to (c), if desired. The properties of the steel sheet for hot-pressing (i.e., press-formed article) are further improved according to the kind of the element that is contained according to need. In the case of containing such an element, the preferable range and the reason for limitation on the range are as follows.

    (a) One or more kinds selected from the group consisting of V, Nb and Zr, in an amount of 0.1% or less (exclusive of 0%) in total
    (b) One or more kinds selected from the group consisting of Cu, Ni, Cr and Mo, in an amount of 1 % or less (exclusive of 0%) in total
    (c) One or more kinds selected from the group consisting of Mg, Ca and REM, in an amount of 0.01% or less (exclusive of 0%) in total

(One or more kinds selected from the group consisting of V, Nb and Zr, in an amount of 0.1 % or less (exclusive of 0%) in total)

V, Nb and Zr have an effect of forming fine carbide and refining the microstructure by a pinning effect. In order to exert such an effect, these elements are preferably contained in an amount of 0.001% or more in total. However, if the content of these elements is too large, coarse carbide is formed and works out to a fracture origin to conversely deteriorate the ductility. For this reason, the content of these elements is preferably 0.1% or less in total. The lower limit of the content of these elements is more preferably 0.005% or more (still more preferably 0.008% or more) in total, and the upper limit is more preferably 0.08% or less (still more preferably 0.06% or less) in total.

(One or more kinds selected from the group consisting of Cu, Ni, Cr and Mo: 1% or less (exclusive of 0%) in total)

Cu, Ni, Cr and Mo suppress ferrite transformation, pearlite transformation and bainite transformation and therefore, effectively act to prevent the formation of ferrite, perlite and bainite during cooling after heating and ensure retained austenite. In order to exert such an effect, these are preferably contained in an amount of 0.01 % or more in total. In the case of considering only the properties, the content is preferably larger, but since the cost of alloying addition rises, the content is preferably 1 % or less in total. In addition, these elements have an action of greatly increasing the strength of austenite and put a large load on hot rolling, making it difficult to manufacture a steel sheet. Therefore, also from the standpoint of manufacturability, the content is preferably 1% or less. The lower limit of the content of these elements is more preferably 0.05% or more (still more preferably 0.06% or more) in total, and the upper limit is more preferably 0.5% or less (still more preferably 0.3% or less) in total.

(One or more kinds selected from the group consisting of Mg, Ca and REM (rare earth element), in an amount of 0.01% or less (exclusive of 0%) in total)

These elements refine the inclusion and therefore, effectively act to enhance the ductility. In order to exert such an effect, these elements are preferably contained in an amount of 0.0001% or more in total. In the case of considering only the properties, the content is preferably larger, but since the effect is saturated, the content is preferably 0.01% or less in total. The lower limit of the content of these elements is more preferably 0.0002% or more (still more preferably 0.0005% or more) in total, and the upper limit is more preferably 0.005% or less (still more preferably 0.003% or less) in total.

In the steel sheet for hot-pressing in the present invention, (A) the average equivalent-circle diameter of Ti-containing precipitates having an equivalent-circle diameter of 30 nm or less among Ti-containing precipitates contained in the steel sheet is 3 nm or more, (B) the relationship of "precipitated Ti amount (mass%)-3.4[N] $\geq 0.5\times$[total Ti amount (mass%)-3.4[N]]" (the relationship of the formula (1)) is satisfied, and (C) the ferrite fraction in the metal microstructure is 30 area% or more, are also important requirements.

The existence state of Ti-containing precipitate in a formed article and the condition itself of the formula (1) little affect the strength or elongation of the steel sheet but affect the microstructure produced when the steel sheet is hot-pressed, thereby enhancing the elongation in a final formed article. Therefore, it must be already controlled at a stage before forming (steel sheet for hot-pressing). When excess Ti relative to N in the steel sheet before forming is finely dispersed or mostly present in a solid solution state in the steel sheet before hot pressing, this is, while remaining fine, present in a large amount during heating in hot pressing. Then, in martensite transformation occurring during rapid cooling in a mold after heating, growth in the longitudinal direction of a martensite lath is impeded, and growth in the width direction is promoted, leading to a small aspect ratio. As a result, delivery of carbon to the surrounding retained austenite from the martensite lath is delayed and since the carbon amount in retained austenite decreases and the stability of retained austenite is reduced, the effect of elongation enhancement is not sufficiently obtained.

From such a standpoint, Ti-containing precipitates needs to be finely dispersed and to this end, the average equivalent-circle diameter of Ti-containing precipitates having an equivalent-circle diameter of 30 nm or less among Ti-containing precipitates contained in the steel sheet must be 3 nm or more (requirement of (A) above). Here, the equivalent-circle diameter of the target Ti-containing precipitate is specified to be 30 nm or less, because it is necessary to control Ti-containing precipitates excluding TiN that is formed coarsely in the melting stage and thereafter does not affect the microstructural change or properties. The size (average equivalent-circle diameter) of the Ti-containing precipitate is preferably 5 nm or more, more preferably 10 nm or more. Examples of the Ti-containing precipitate targeted in the present invention include TiC and other Ti-containing precipitates such as TiVC and TiNbC.

In addition, in the steel sheet for hot-pressing, the majority of Ti except for Ti to be used for precipitating and fixing N must be caused to be present in a precipitated state. To this end, the amount of Ti present as a precipitate other than TiN (i.e., precipitated Ti amount-3.4[N]) needs to be an amount equal to or more than 0.5 times the remainder after deduction of Ti that forms TiN from total Ti (i.e., $0.5 \times$[(total Ti amount (mass%))-3.4[N]]) (requirement of (B) above). The "precipitated Ti amount (mass%)-3.4[N]" is preferably $0.6 \times$[(total Ti amount (mass%))-3.4[N]] or more, more preferably $0.7 \times$[(total Ti amount (mass%))-3.4[N]] or more.

The steel material must be necessarily processed before hot stamping and is sometimes subjected to press forming, and in such a case, a predetermined amount of ferrite as soft microstructure needs to be ensured. From such a standpoint, the ferrite fraction in the steel sheet for hot-pressing must be 30 area% or more (requirement of (C) above). The ferrite fraction is preferably 50 area% or more, more preferably 70 area% or more.

In the steel sheet for hot-pressing, the remainder of the metal microstructure is not particularly limited but includes, for example, at least any one of pearlite, bainite, martensite and retained austenite.

For manufacturing the steel sheet (steel sheet for hot-pressing) in the present invention, a slab prepared by melting a steel material having the above-described chemical component composition may be hot-rolled at a heating temperature: 1,100°C or more (preferably 1,150°C or more) and 1,300°C or less (preferably 1,250°C or less) and a finish rolling temperature of 750°C or more (preferably 780°C or more) and 850°C or less (preferably 830°C or less), and after that, it may be hold for 10 seconds or more in a temperature region of 700 to 650°C, and thereafter, it may be wound at a temperature of 450°C or more (preferably 480°C or more) and 650°C or less (preferably 630°C or less).

In the method above, the Ti-containing precipitate such as TiC formed during ferrite transformation is coarsened by allowing ferrite transformation to sufficiently proceed at a high temperature. In addition, the Ti-containing precipitate such as TiC formed is grown and coarsened by setting the winding temperature to a high temperature.

The steel sheet for hot-pressing which has the above-described chemical component composition, metal microstructure and Ti-precipitation state may be directly used for the manufacture by hot pressing or may be subjected to cold rolling at a rolling reduction of 60% or less (preferably 40% or less) after pickling and then used for the manufacture by hot pressing. In addition, the steel sheet for hot-pressing or a cold rolled material thereof may be subjected to a heat treatment in a temperature range where the whole amount of Ti-containing precipitate is not dissolved in solid (for example, 1,000°C or less). Furthermore, the surface of the steel sheet for hot-pressing (the surface of the base steel sheet) in the present invention may be subjected to plating containing one or more kinds of Al, Zn, Mg and Si.

Using the above-described steel sheet for hot-pressing, the steel sheet is heated at a temperature equal to or more than $Ac_1$ transformation point+20°C ($Ac_1$+20°C) and equal to or less than $Ac_3$ transformation point-20°C ($Ac_3$-20°C) and after starting press forming, the steel sheet is cooled to a temperature equal to or less than a temperature 100°C below the bainite transformation starting temperature Bs (Bs-100°C) while ensuring an average cooling rate of 20°C/sec or more in a mold during forming as well as after the completion of forming, whereby an optimal microstructure as a formed article with low strength and high ductility can be produced in a press-formed article having a single property (hereinafter, sometimes referred to as "single-region formed article"). The reason for specifying each requirement in this forming method is as follows.

In a steel sheet containing a predetermined amount of ferrite, in order to cause a partial transformation to austenite while allowing part of the ferrite to remain, the heating temperature must be controlled to a predetermined range. If the heating temperature of the steel sheet is less than $Ac_1$ transformation point+20°C, a sufficient amount of austenite cannot be obtained during heating, and a predetermined amount of retained austenite cannot be ensured in the final microstructure (microstructure of a formed article). If the heating temperature of the steel sheet exceeds $Ac_3$ transformation point-20°C, the transformation amount to austenite is excessively increased during heating, and a predetermined amount of ferrite cannot be ensured in the final microstructure (microstructure of a formed article).

For allowing austenite formed in the heating step above to be a desired microstructure while impeding production of a microstructure such as ferrite or pearlite, the average cooling rate during forming as well as after forming and the cooling finishing temperature must be appropriately controlled. From such a standpoint, it is necessary that the average cooling rate during forming is 20°C/sec or more and the cooling finishing temperature is equal to or less than a temperature 100°C below the bainite transformation starting temperature Bs. The average cooling rate during forming is preferably 30°C/sec or more (more preferably 40°C/sec or more). When the cooling finishing temperature is equal to or less than a temperature 100°C below the bainite transformation starting temperature Bs, austenite present during heating is transformed to bainite or martensite while impeding production of a microstructure such as ferrite or pearlite, whereby fine austenite is caused to remain between bainite or martensite laths and a predetermined amount of retained austenite is assured while ensuring bainite and martensite.

If the cooling finishing temperature exceeds the temperature 100°C below the bainite transformation starting temperature Bs or the average cooling rate is less than 20°C/sec, a microstructure such as ferrite and pearlite is formed, and a predetermined amount of retained austenite cannot be ensured, resulting in deterioration of the elongation (ductility) in a formed article. The cooling finishing temperature is not particularly limited as long as it is equal to or less than a temperature 100°C below Bs, and the cooling finishing temperature may be, for example, equal to or less than the martensite transformation starting temperature Ms.

After reaching a temperature equal to or less than the temperature 100°C below the bainite transformation starting temperature Bs, fundamentally, the average cooling rate need not be controlled, but the steel sheet may be cooled to room temperature at an average cooling rate of, for example, 1°C/sec or more and 100°C/sec or less. Control of the average cooling rate during forming as well as after the completion of forming can be achieved by a technique of, for example, (a) controlling the temperature of the forming mold (the cooling medium shown in FIG. 1), or (b) controlling the thermal conductivity of the mold.

As to the press-formed article (single-region formed article) manufactured by the above-described press forming, the metal microstructure in the formed article (i.e., in the steel sheet constituting the formed article) includes retained austenite: from 3 to 20 area%, ferrite: from 30 to 80 area%: bainitic ferrite: less than 30 area% (exclusive of 0 area%), and martensite: 31 area% or less (exclusive of 0 area%), the average equivalent-circle diameter of Ti-containing precipitates having an equivalent-circle diameter of 30 nm or less among Ti-containing precipitates contained in the press-formed article is 3 nm or more (the form of Ti-containing precipitate is the same as in the steel sheet), the carbon amount in retained austenite is 0.50% or more, and a high-level balance between high strength and elongation can be achieved as a uniform property in a formed article. The reason for setting the range of each requirement (basic microstructure) in this hot press-formed article is as follows.

Retained austenite has an effect of increasing the work hardening ratio (transformation induced plasticity) and enhancing the ductility of the press-formed article by undergoing transformation to martensite during plastic deformation. In order to exert such an effect, the retained austenite fraction must be 3 area% or more. The ductility is more improved as the retained austenite fraction is higher. In the composition to be used for an automotive steel sheet, the assurable retained austenite is limited, and the upper limit is about 20 area%. The lower limit of the retained austenite is preferably 5 area% or more (more preferably 7 area% or more).

When the main microstructure is fine ferrite having high ductility, the ductility (elongation) of a press-formed article can be enhanced. From such a standpoint, the ferrite fraction is 30 area% or more. However, if this fraction exceeds 80 area%, the strength of a formed article cannot be ensured. The lower limit of the ferrite fraction is preferably 35 area% or more (more preferably 40 area% or more), and the upper limit is preferably 75 area% or less (more preferably 70 area% or less).

The bainitic ferrite is a microstructure effective in enhancing the strength of a formed article but is a structure slightly lacking in ductility and therefore when present in a large amount, it deteriorates the elongation. From such a standpoint, the bainitic ferrite fraction is less than 30 area%. The upper limit of the bainitic ferrite fraction is preferably 25 area% or less (more preferably 20 area% or less).

The martensite (as-quenched martensite) is a microstructure effective in enhancing the strength of a formed article but is a structure lacking in ductility and therefore when present in a large amount, it deteriorates the elongation. From such a standpoint, the martensite fraction is 31 area% or less. The upper limit of the martensite fraction is preferably 25 area% or less (more preferably 20 area% or less).

The microstructure other than those described above is not particularly limited, and pearlite, etc. may be contained as a remainder microstructure, but such a microstructure is inferior to other microstructures in terms of contribution to strength or contribution to ductility, and it is fundamentally preferable not to contain such a microstructure (may be even 0 area%).

The carbon amount in retained austenite affects the timing of work induced transformation of retained austenite to martensite during the deformation such as tensile test, and as the carbon amount is larger, work induced transformation occurs in a higher strain region, leading to the increase of the transformation induced plasticity (TRIP) effect. In the case of the process in the present invention, carbon is delivered to the surrounding austenite from the formed martensite lath during cooling. At this time, when the Ti carbide or carbonitride dispersed in the steel is coarsely dispersed, the growth of martensite lath in the longitudinal direction proceeds without impeding the growth, and a martensite lath having large aspect ratio with a narrow long width is produced. As a result, carbon is easily delivered in the width direction from the martensite lath, and not only the carbon amount in retained austenite is increased but also the ductility is enhanced. From such a standpoint, in the press-formed article in the present invention, the carbon amount in retained austenite in the steel is specified to be 0.50% or more (preferably 0.60% or more). The carbon amount in retained austenite can be enriched to about 0.70%, but about 1.0% is the limit.

When the steel sheet for hot-pressing in the present invention is used, the properties such as strength and elongation of a press-formed article can be controlled by appropriately adjusting the press-forming conditions (heating temperature and cooling rate) and moreover, a press-formed article having high ductility (residual ductility) is obtained, making its application possible to a site (e.g., energy absorption member) to which the conventional press-formed article can be hardly applied. This is very useful in expanding the application range of a press-formed article. In addition to the above-described single-region formed article, in the manufacture of a press-formed article by press-forming a steel sheet by use of a press-forming mold, when the heating temperature and the conditions in each region during press-forming are appropriately controlled and the microstructure of each region is thereby adjusted, a press-formed article exerting a strength-ductility balance depending on respective regions (hereinafter, sometimes referred to as "multiple-region formed article") is obtained.

When manufacturing a multiple-region formed article as described above by using the steel sheet for hot-pressing in the present invention, the manufacture may be performed by diving a heating region of the steel sheet into at least two regions, heating one region (hereinafter, referred to as first region) at a temperature of $Ac_3$ transformation point or more and 950°C or less, heating another region (hereinafter, referred to as second region) at a temperature equal to or more than $Ac_1$ transformation point+20°C and equal to or less than $Ac_3$ transformation point-20°C, then starting press forming of both the first and second regions, and cooling the steel sheet to a temperature equal to or less than the martensite transformation starting temperature Ms while ensuring an average cooling rate of 20°C/sec or more in a mold in both of the first and second regions during forming as well as after the completion of forming.

In the method above, a heating region of the steel sheet is divided into at least two regions (high strength-side region and low strength-side region), and the manufacturing conditions are controlled according to respective regions, whereby a press-formed article exerting a strength-ductility balance depending on respective regions is obtained. Out of two regions, the second region corresponds to the low strength-side region, and the manufacturing conditions, microstructure and properties in this region are basically the same as those of the above-described single-region formed article. In the following, the manufacturing conditions for forming the first region (corresponding to the high strength-side region) are described. Here, when conducting this manufacturing method, regions different in the heating temperature need to be formed in a single steel sheet, but the temperature can be controlled while keeping a temperature boundary portion of 50 mm or less, by using an existing heating furnace (e.g., far infrared furnace, electric furnace+shield).

(Manufacturing Conditions of First Region/High Strength-Side Region)

In order to appropriately adjust the microstructure of the hot press-formed article, the heating temperature must be controlled to a predetermined range. By appropriately controlling this heating temperature, in the subsequent cooling process, transformation to a microstructure mainly including martensite can be caused to occur while ensuring a predetermined amount of retained austenite, and a desired microstructure can be produced in the region of a final hot press-formed article. If the steel sheet heating temperature in this region is less than the $Ac_3$ transformation point, a sufficient amount of austenite cannot be obtained during heating, and a predetermined amount of retained austenite cannot be ensured in the final microstructure (the microstructure of a formed article). If the heating temperature of the steel sheet exceeds 950°C, the austenite grain size grows during heating, the martensite transformation starting temperature (Ms point) and the martensite transformation finishing temperature (Mf point) are elevated, retained austenite cannot be ensured during quenching, and good formability is not achieved. The heating temperature of the steel sheet is preferably $Ac_3$ transformation point+50°C or more and 930°C or less.

In order to allow austenite formed in the heating step above to be a desired microstructure while impeding production of a microstructure such as ferrite or pearlite, the average cooling rate during forming as well as after forming and the cooling finishing temperature must be appropriately controlled. From such a standpoint, the average cooling rate during forming needs to be 20°C/sec or more, and the cooling finishing temperature needs to be equal to or less than the martensite transformation starting temperature (Ms point). The average cooling rate during forming is preferably 30°C/sec or more (more preferably 40°C/sec or more). When the cooling finishing temperature is equal to or less than the martensite transformation starting temperature (Ms point), austenite present during heating is transformed to martensite while impeding production of a microstructure such as ferrite or pearlite, whereby martensite is ensured. Specifically, the cooling finishing temperature is 400°C or less, preferably 300°C or less.

In the press-formed article obtained by such a method, the metal microstructure, precipitate, etc. are different between the first region and the second region. In the first region, the metal microstructure includes retained austenite: from 3 to 20 area% (the action and effect of retained austenite are the same as above), and martensite: 80 area% or more. The second region satisfies the metal microstructure and the carbon amount in the retained austenite which are the same as in the above-described single-region formed article.

When the main microstructure of the first region is high-strength martensite containing a predetermined amount of retained austenite, a press-formed article can be assured of ductility in a specific region and high strength. From such a standpoint, the area fraction of martensite needs to be 80 area% or more. The martensite fraction is preferably 85 area% or more (more preferably 90 area% or more). The first region may partially contain ferrite, pearlite, bainite, etc. as a remainder microstructure.

EXAMPLES

[Example 1]

Steel materials (Steel Nos. 1 to 3, 5 to 15 and 17 to 31) having the chemical component composition shown in Tables 1 and 2 below were melted in vacuum to make an experimental slab, then hot-rolled to prepare a steel sheet, followed by cooling and subjecting to a treatment simulating the winding (sheet thickness: 1.6 mm or 3.0 mm). As to the method for treatment simulating the winding, the sample was cooled to a winding temperature, and put in a furnace heated at the winding temperature, followed by holding for 30 minutes and then cooling in the furnace. The manufacturing conditions of the steel sheets are shown in Tables 3 and 4 below. Here, in Tables 1 and 2, the $Ac_1$ transformation point, $Ac_3$ transformation point, Ms point, and Bs point were determined using the following formulae (2) to (5) (see, for example, The Physical Metallurgy of Steels, Leslie, Maruzen, (1985)). In addition, treatments (1) and (2) shown in Remarks of Table 3 mean that each treatment (rolling, cooling and alloying) described below was performed.

$$Ac_1 \text{ transformation point } (°C) = 723+29.1\times[Si]-10.7\times[Mn]+16.9\times[Cr]-16.9[Ni] \cdots (2)$$

$$Ac_3 \text{ transformation point } (°C) = 910-203\times[C]^{1/2}+44.7\times[Si]-30\times[Mn]+700\times[P]+400\times[Al]+400\times[Ti]+104\times[V]-11\times[Cr]+31.5\times[Mo]-20\times[Cu]-15.2\times[Ni] \cdots (3)$$

$$Ms \text{ point } (°C) = 550-361\times[C]-39\times[Mn]-10\times[Cu]-17\times[Ni]-20\times[Cr]-5\times[Mo]+30\times[Al] \cdots (4)$$

Bs point $(°C) = 830-270\times[C]-90\times[Mn]-37\times[Ni]-70\times[Cr]-83\times[Mo] \cdots (5)$ wherein [C], [Si], [Mn], [P], [Al], [Ti], [V], [Cr], [Mo], [Cu] and [Ni] represent the contents (mass%) of C, Si, Mn, P, Al, Ti, V, Cr, Mo, Cu and Ni, respectively. In the case where the element shown in each term of formulae (2) to (5) is not contained, the calculation is done assuming that the term is not present.

Treatment (1): The hot-rolled steel sheet was cold-rolled (sheet thickness: 1.6 mm), then heated at 800°C for simulating continuous annealing in a heat treatment simulator, held for 90 seconds, cooled to 500°C at an average cooling rate of 20°C/sec, and held for 300 seconds.

Treatment (2): The hot-rolled steel sheet was cold-rolled (sheet thickness: 1.6 mm), then heated at 860°C for simulating a continuous hot-dip galvanizing line in a heat treatment simulator, cooled to 400°C at an average cooling rate of 30°C/sec, held, further held under the conditions of 500°C×10 seconds for simulating immersion in a plating bath and alloying treatment, and thereafter cooled to room temperature at an average cooling rate of 20°C/sec.

[Table 1]

| Steel No. | Chemical Component Composition* (mass%) | | | | | | | | | | | |
|---|---|---|---|---|---|---|---|---|---|---|---|---|
| | C | Si | Mn | P | S | Al | B | Ti | N | V | Nb | Cu |
| 1 | 0.220 | 1.20 | 1.20 | 0.0050 | 0.0020 | 0.030 | 0.0020 | 0.044 | 0.0040 | - | - | - |
| 2 | 0.150 | 1.20 | 1.20 | 0.0050 | 0.0020 | 0.030 | 0.0020 | 0.044 | 0.0040 | - | - | - |
| 3 | 0.220 | 0.05 | 1.20 | 0.0050 | 0.0020 | 0.030 | 0.0020 | 0.044 | 0.0040 | - | - | - |
| 5 | 0.220 | 1.20 | 1.20 | 0.0050 | 0.0020 | 0.030 | 0.0020 | 0.024 | 0.0040 | - | - | - |
| 6 | 0.220 | 1.20 | 1.20 | 0.0050 | 0.0020 | 0.030 | 0.0020 | 0.044 | 0.0040 | - | - | - |
| 7 | 0.220 | 1.20 | 1.20 | 0.0050 | 0.0020 | 0.030 | 0.0020 | 0.044 | 0.0040 | - | - | - |
| 8 | 0.220 | 1.20 | 1.20 | 0.0050 | 0.0020 | 0.030 | 0.0020 | 0.044 | 0.0040 | - | - | - |
| 9 | 0.220 | 1.20 | 1.20 | 0.0050 | 0.0020 | 0.030 | 0.0020 | 0.044 | 0.0040 | - | - | - |
| 10 | 0.220 | 1.20 | 1.20 | 0.0050 | 0.0020 | 0.030 | 0.0020 | 0.044 | 0.0040 | - | - | - |
| 11 | 0.220 | 1.20 | 1.20 | 0.0050 | 0.0020 | 0.030 | 0.0020 | 0.044 | 0.0040 | - | - | - |
| 12 | 0.220 | 1.20 | 1.20 | 0.0050 | 0.0020 | 0.030 | 0.0020 | 0.044 | 0.0040 | - | - | - |
| 13 | 0.220 | 1.20 | 1.20 | 0.0050 | 0.0020 | 0.030 | 0.0020 | 0.044 | 0.0040 | - | - | - |
| 14 | 0.220 | 1.20 | 1.20 | 0.0050 | 0.0020 | 0.030 | 0.0020 | 0.044 | 0.0040 | - | - | - |
| 15 | 0.220 | 2.00 | 1.20 | 0.0050 | 0.0020 | 0.030 | 0.0020 | 0.044 | 0.0040 | - | - | - |

| Steel No. | Chemical Component Composition* (mass%) | | | | | | | $Ac_3$-20°C (°C) | $Ac_1$+20°C (°C) | Bs-100°C (°C) | Ms Point (°C) |
|---|---|---|---|---|---|---|---|---|---|---|---|
| | Ni | Zr | Mg | Ca | REM | Cr | Mo | | | | |
| 1 | - | - | - | - | - | - | - | 845 | 765 | 563 | 425 |
| 2 | - | - | - | - | - | 0.20 | - | 860 | 768 | 568 | 446 |
| 3 | - | - | - | - | - | 0.20 | - | 792 | 735 | 549 | 421 |
| 5 | - | - | - | - | - | 0.20 | - | 833 | 768 | 549 | 421 |
| 6 | - | - | - | - | - | 0.20 | - | 843 | 768 | 549 | 421 |
| 7 | - | - | - | - | - | 0.20 | - | 843 | 768 | 549 | 421 |
| 8 | - | - | - | - | - | 0.20 | - | 843 | 768 | 549 | 421 |
| 9 | - | - | - | - | - | 0.20 | - | 843 | 768 | 549 | 421 |

(continued)

| Steel No. | Chemical Component Composition* (mass%) | | | | | | | $Ac_3$-20°C (°C) | $Ac_1$+20°C (°C) | Bs-100°C (°C) | Ms Point (°C) |
|---|---|---|---|---|---|---|---|---|---|---|---|
| | Ni | Zr | Mg | Ca | REM | Cr | Mo | | | | |
| 10 | - | - | - | - | - | 0.20 | - | 843 | 768 | 549 | 421 |
| 11 | - | - | - | - | - | 0.20 | - | 843 | 768 | 549 | 421 |
| 12 | - | - | - | - | - | 0.20 | - | 843 | 768 | 549 | 421 |
| 13 | - | - | - | - | - | 0.20 | - | 843 | 768 | 549 | 421 |
| 14 | - | - | - | - | - | 0.20 | - | 843 | 768 | 549 | 421 |
| 15 | - | - | - | - | - | 0.20 | - | 879 | 792 | 549 | 421 |
| *Remainder: Iron and unavoidable impurities except for P, S and N. | | | | | | | | | | | |

[Table 2]

| Steel No. | Chemical Component Composition* (mass%) | | | | | | | | | | | |
|---|---|---|---|---|---|---|---|---|---|---|---|---|
| | C | Si | Mn | P | S | Al | B | Ti | N | V | Nb | Cu |
| 17 | 0.720 | 1.20 | 1.20 | 0.0050 | 0.0020 | 0.030 | 0.0020 | 0.044 | 0.0040 | - | - | - |
| 18 | 0.220 | 1.20 | 0.80 | 0.0050 | 0.0020 | 0.030 | 0.0020 | 0.044 | 0.0040 | - | - | - |
| 19 | 0.220 | 1.20 | 2.40 | 0.0050 | 0.0020 | 0.030 | 0.0020 | 0.044 | 0.0040 | - | - | - |
| 20 | 0.220 | 1.20 | 1.20 | 0.0050 | 0.0020 | 0.030 | 0.0020 | 0.100 | 0.0040 | - | - | - |
| 21 | 0.220 | 1.20 | 1.20 | 0.0050 | 0.0020 | 0.030 | 0.0020 | 0.200 | 0.0040 | - | - | - |
| 22 | 0.220 | 0.50 | 1.20 | 0.0050 | 0.0020 | 0.40 | 0.0020 | 0.044 | 0.0040 | - | - | - |
| 23 | 0.220 | 1.20 | 1.20 | 0.0050 | 0.0020 | 0.030 | 0.0020 | 0.044 | 0.0040 | 0.030 | - | - |
| 24 | 0.220 | 1.20 | 1.20 | 0.0050 | 0.0020 | 0.030 | 0.0020 | 0.044 | 0.0040 | - | 0.020 | - |
| 25 | 0.220 | 1.20 | 1.20 | 0.0050 | 0.0020 | 0.030 | 0.0020 | 0.044 | 0.0040 | - | - | 0.20 |
| 26 | 0.220 | 1.20 | 1.20 | 0.0050 | 0.0020 | 0.030 | 0.0020 | 0.044 | 0.0040 | - | - | - |
| 27 | 0.220 | 1.20 | 1.20 | 0.0050 | 0.0020 | 0.030 | 0.0020 | 0.044 | 0.0040 | - | - | - |
| 28 | 0.220 | 1.20 | 1.20 | 0.0050 | 0.0020 | 0.030 | 0.0020 | 0.044 | 0.0040 | - | - | - |
| 29 | 0.220 | 1.20 | 1.20 | 0.0050 | 0.0020 | 0.030 | 0.0020 | 0.044 | 0.0040 | - | - | - |
| 30 | 0.220 | 1.20 | 1.20 | 0.0050 | 0.0020 | 0.030 | 0.0020 | 0.044 | 0.0040 | - | - | - |
| 31 | 0.220 | 1.20 | 1.20 | 0.0050 | 0.0020 | 0.030 | 0.0020 | 0.044 | 0.0040 | - | - | - |

| Steel No. | Chemical Component Composition* (mass%) | | | | | | | $Ac_3$-20°C (°C) | $Ac_1$+20°C (°C) | Bs-100°C (°C) | Ms Point (°C) |
|---|---|---|---|---|---|---|---|---|---|---|---|
| | Ni | Zr | Mg | Ca | REM | Cr | Mo | | | | |
| 17 | - | - | - | - | - | 0.20 | - | 766 | 768 | 414 | 240 |
| 18 | - | - | - | - | - | 0.20 | - | 855 | 773 | 585 | 436 |
| 19 | - | - | - | - | - | 0.20 | - | 807 | 756 | 441 | 374 |
| 20 | - | - | - | - | - | 0.20 | - | 866 | 768 | 549 | 421 |
| 21 | - | - | - | - | - | 0.20 | - | 906 | 768 | 549 | 421 |
| 22 | - | - | - | - | - | 0.20 | - | 960 | 748 | 549 | 432 |
| 23 | - | - | - | - | - | 0.20 | - | 846 | 768 | 549 | 421 |

(continued)

| Steel No. | Chemical Component Composition* (mass%) | | | | | | | Ac$_3$-20°C (°C) | Ac$_1$+20°C (°C) | Bs-100°C (°C) | Ms Point (°C) |
|---|---|---|---|---|---|---|---|---|---|---|---|
| | Ni | Zr | Mg | Ca | REM | Cr | Mo | | | | |
| 24 | - | - | - | - | - | 0.20 | - | 843 | 768 | 549 | 421 |
| 25 | - | - | - | - | - | 0.20 | - | 839 | 768 | 549 | 419 |
| 26 | 0.20 | - | - | - | - | 0.20 | - | 840 | 765 | 541 | 417 |
| 27 | - | - | - | - | - | 0.20 | 0.20 | 849 | 768 | 532 | 420 |
| 28 | - | 0.015 | - | - | - | 0.20 | - | 843 | 768 | 549 | 421 |
| 29 | - | - | 0.002 | - | - | 0.20 | - | 843 | 768 | 549 | 421 |
| 30 | - | - | - | 0.002 | - | 0.20 | - | 843 | 768 | 549 | 421 |
| 31 | - | - | - | - | 0.002 | 0.20 | - | 843 | 768 | 549 | 421 |

*Remainder: Iron and unavoidable impurities except for P, S and N.

[Table 3]

| Steel No. | Steel Sheet Manufacturing Conditions | | | | |
|---|---|---|---|---|---|
| | Heating Temperature (°C) | Finish Rolling Temperature (°C) | Cooling time from 700 to 650°C (sec) | Winding Temperature (°C) | Remarks |
| 1 | 1200 | 800 | 12 | 500 | - |
| 2 | 1200 | 800 | 12 | 500 | - |
| 3 | 1200 | 800 | 12 | 500 | - |
| 5 | 1200 | 800 | 12 | 500 | - |
| 6 | 1200 | 800 | 1 | 500 | - |
| 7 | 1200 | 900 | 12 | 500 | - |
| 8 | 1200 | 800 | 12 | 500 | treatment (1) |
| 9 | 1200 | 800 | 12 | 500 | treatment (2) |
| 10 | 1200 | 800 | 12 | 500 | - |
| 11 | 1200 | 800 | 12 | 500 | - |
| 12 | 1200 | 800 | 12 | 500 | - |
| 13 | 1200 | 800 | 12 | 500 | - |
| 14 | 1200 | 800 | 12 | 500 | - |
| 15 | 1200 | 800 | 12 | 500 | - |

[Table 4]

| Steel No. | Steel Sheet Manufacturing Conditions | | | | |
|---|---|---|---|---|---|
| | Heating Temperature (°C) | Finish Rolling Temperature (°C) | Cooling time from 700 to 650°C (sec) | Winding Temperature (°C) | Remarks |
| 17 | 1200 | 800 | 12 | 500 | - |
| 18 | 1200 | 800 | 12 | 500 | - |
| 19 | 1200 | 800 | 12 | 500 | - |
| 20 | 1200 | 800 | 12 | 500 | - |
| 21 | 1200 | 800 | 12 | 500 | - |
| 22 | 1200 | 800 | 12 | 500 | - |
| 23 | 1200 | 800 | 12 | 500 | - |
| 24 | 1200 | 800 | 12 | 500 | - |
| 25 | 1200 | 800 | 12 | 500 | - |
| 26 | 1200 | 800 | 12 | 500 | - |
| 27 | 1200 | 800 | 12 | 500 | - |
| 28 | 1200 | 800 | 12 | 500 | - |
| 29 | 1200 | 800 | 12 | 500 | - |
| 30 | 1200 | 800 | 12 | 500 | - |
| 31 | 1200 | 800 | 12 | 500 | - |

With respect to the steel sheets (steel sheets for press-forming) obtained, analysis of the Ti precipitation state and observation of the metal microstructure (the fraction of each microstructure) were performed in the following manner. In addition, the tensile strength (TS) of each steel sheet was measured by the later-described method. The results obtained are shown in Tables 5 and 6 below together with the calculated value of 0.5×[total Ti amount (mass%)-3.4[N]] [indicated as 0.5×[total Ti amount-3.4[N]].

(Analysis of Ti Precipitation State of Steel Sheet)

An extraction replica sample was prepared, and a transmission electron microscope image (magnifications: 100,000 times) of Ti-containing precipitates was photographed using a transmission electron microscope (TEM). At this time, the Ti-containing precipitate (those having an equivalent-circle diameter of 30 mn or less) was identified by the composition analysis of precipitates by means of an energy dispersive X-ray spectrometer (EDX). At least 100 pieces of Ti-containing precipitates were measured for the area by image analysis, the equivalent-circle diameter was determined therefrom, and the average value thereof was defined as the precipitate size (average equivalent-circle diameter of Ti-containing precipitates). As for the "precipitated Ti amount (mass%)-3.4[N]" (the amount of Ti present as a precipitate), extraction residue analysis was performed using a mesh having a mesh size of 0.1 μm (during extraction treatment, a fine precipitate resulting from aggregation of precipitates could also be measured), and the "precipitated Ti amount (mass%)-3.4[N]" (in Tables 5 and 6, indicated as "Precipitated Ti Amount-3.4[N]") was determined. In the case where the Ti-containing precipitate partially contained V or Nb, the contents of these were also measured.

(Observation of Metal Microstructure (Fraction of Each Microstructure))

(1) As to the microstructures of ferrite (and bainitic ferrite and pearlite) in the steel sheet, the steel sheet was corroded with nital and after distinguishing each of microstructures from each other by SEM observation (magnifications: 1,000 times or 2,000 times), the ferrite fraction (area ratio) was determined.
(2) The retained austenite fraction in the steel sheet was measured by X-ray diffraction method after the steel sheet was ground to 1/4 thickness and then subjected to chemical polishing (for example, ISJJ Int. Vol. 33. (1933), No. 7, P. 776). The carbon amount of the retained austenite was also measured.

[Table 5]

| Steel No. | Steel Sheet for Press-Fonning | | | | | |
| | Precipitated Ti Amount-3.4[N] (mass %) | 0.5×[Total Ti Amount-3.4[N] (mass %) | Average Equivalent-Circle Diameter Ti-Containing Precipitates (nm) | Ferrite Fraction (area%) | Remainder Microstructure* | Tensile Strength (MPa) |
|---|---|---|---|---|---|---|
| 1 | 0.028 | 0.015 | 12.3 | 51 | B | 745 |
| 2 | 0.028 | 0.015 | 11.2 | 65 | B | 675 |
| 3 | 0.024 | 0.015 | 11.8 | 56 | P+B | 719 |
| 5 | 0.005 | 0.005 | 12.0 | 58 | B | 708 |
| 6 | 0.025 | 0.015 | 11.7 | 14 | B | 1021 |
| 7 | 0.003 | 0.015 | 2.6 | 41 | B | 951 |
| 8 | 0.026 | 0.015 | 11.7 | 55 | B | 726 |
| 9 | 0.029 | 0.015 | 11.5 | 60 | B | 701 |
| 10 | 0.029 | 0.015 | 10.7 | 58 | B | 711 |
| 11 | 0.029 | 0.015 | 10.7 | 58 | B | 711 |
| 12 | 0.029 | 0.015 | 10.7 | 58 | B | 711 |
| 13 | 0.029 | 0.015 | 10.7 | 58 | B | 711 |
| 14 | 0.029 | 0.015 | 10.7 | 58 | B | 711 |

(continued)

| Steel No. | Steel Sheet for Press-Fonning | | | | | |
|---|---|---|---|---|---|---|
| | Precipitated Ti Amount-3.4[N] (mass %) | 0.5×[Total Ti Amount-3.4[N] (mass %) | Average Equivalent-Circle Diameter Ti-Containing Precipitates (nm) | Ferrite Fraction (area%) | Remainder Microstructure* | Tensile Strength (MPa) |
| 15 | 0.026 | 0.015 | 12.6 | 60 | B | 701 |
| *B: Bainitic ferrite, P: pearlite. | | | | | | |

[Table 6]

| Steel No. | Steel Sheet for Press-Forming | | | | | |
|---|---|---|---|---|---|---|
| | Precipitated Ti Amount-3.4[N] (mass %) | 0.5×[Total Ti Amount-3.4[N] (mass %) | Average Equivalent-Circle Diameter of Ti-Containing Precipitates (nm) | Ferrite Fraction (area%) | Remainder Microstructure* | Tensile Strength (MPa) |
| 17 | 0.027 | 0.015 | 12.1 | 5 | B+M | 1180 |
| 18 | 0.026 | 0.015 | 10.6 | 45 | P+B | 775 |
| 19 | 0.028 | 0.015 | 13.0 | 53 | B+M | 735 |
| 20 | 0.076 | 0.043 | 13.7 | 58 | B | 710 |
| 21 | 0.168 | 0.093 | 17.5 | 41 | B | 797 |
| 22 | 0.023 | 0.015 | 12.9 | 51 | B | 746 |
| 23 | 0.023 | 0.015 | 12.3 | 46 | B | 768 |
| 24 | 0.027 | 0.015 | 10.4 | 53 | B | 735 |
| 25 | 0.027 | 0.015 | 12.9 | 56 | B | 720 |
| 26 | 0.024 | 0.015 | 10.9 | 57 | B | 716 |
| 27 | 0.030 | 0.015 | 12.5 | 52 | B | 740 |
| 28 | 0.026 | 0.015 | 12.3 | 58 | B | 745 |
| 29 | 0.027 | 0.015 | 12.0 | 60 | B | 731 |
| 30 | 0.025 | 0.015 | 11.8 | 55 | B | 722 |
| 31 | 0.024 | 0.015 | 12.2 | 63 | B | 747 |
| *B: Bainitic ferrite, P: pearlite, M: Martensite. | | | | | | |

Each of the steel sheets above (1.6 mm$^t$×150 mm×200 mm) (the thickness t of those other than the treatment (1) and (2) was adjusted to 1.6 mm by hot rolling) was heated at a predetermined temperature in a heating furnace, followed by subjecting to press forming and cooling treatment using a hat-shaped mold (FIG. 1) to obtain a formed article. The press forming conditions (heating temperature, average cooling rate, and rapid cooling finishing temperature during press forming) are shown in Table 7 below.

[Table 7]

| Steel No. | Press-Forming Conditions | | |
|---|---|---|---|
| | Heating Temperature (°C) | Average Cooling Rate (°C/sec) | Rapid Cooling Finishing Temperature (°C) |
| 1 | 810 | 40 | 300 |
| 2 | 810 | 40 | 300 |

(continued)

| Steel No. | Press-Forming Conditions | | |
|---|---|---|---|
| | Heating Temperature (°C) | Average Cooling Rate (°C/sec) | Rapid Cooling Finishing Temperature (°C) |
| 3 | 760 | 40 | 300 |
| 5 | 800 | 40 | 300 |
| 6 | 810 | 40 | 300 |
| 7 | 810 | 40 | 300 |
| 8 | 810 | 40 | 300 |
| 9 | 810 | 40 | 300 |
| 10 | 810 | 40 | 300 |
| 11 | 900 | 40 | 300 |
| 12 | 810 | 5 | 300 |
| 13 | 810 | 40 | 600 |
| 14 | 810 | 40 | 100 |
| 15 | 840 | 40 | 300 |
| 17 | 770 | 40 | 300 |
| 18 | 810 | 40 | 300 |
| 19 | 780 | 40 | 300 |
| 20 | 820 | 40 | 300 |
| 21 | 840 | 40 | 300 |
| 22 | 850 | 40 | 300 |
| 23 | 810 | 40 | 300 |
| 24 | 810 | 40 | 300 |
| 25 | 800 | 40 | 300 |
| 26 | 800 | 40 | 300 |
| 27 | 810 | 40 | 300 |
| 28 | 810 | 40 | 300 |
| 29 | 810 | 40 | 300 |
| 30 | 810 | 40 | 300 |
| 31 | 810 | 40 | 300 |

With respect to the press-formed articles obtained, the tensile strength (TS), elongation (total elongation EL), observation of metal microstructure (fraction of each microstructure), and the carbon amount in the retained austenite was measured by the method described above.

(Measurement of Tensile Strength (TS) and Elongation (Total Elongation EL))

A tensile test was performed using a JIS No. 5 test piece, and the tensile strength (TS) and elongation (EL) were measured. At this time, the strain rate in the tensile test was set to 10 mm/sec. In the present invention, the test piece was rated "passed" when a tensile strength (TS) of 980 MPa or more and an elongation (EL) of 18% or more were satisfied and the strength-elongation balance (TS×EL) was 20,000 (MPa·%) or more.

(Observation of Metal Microstructure (Fraction of Each Microstructure))

(1) With respect to the microstructures of ferrite and bainitic ferrite in the steel sheet, the steel sheet was corroded with nital and after distinguishing ferrite amd bainitic ferrite from each other (including distinguishing from tempered martensite) by SEM observation (magnifications: 1,000 times or 2,000 times), the fraction (area ratio) of each microstructure was determined.

(2) The retained austenite fraction in the steel sheet was measured by X-ray diffraction method after the steel sheet was ground to 1/4 thickness and then subjected to chemical polishing (for example, ISJJ Int. Vol. 33. (1933), No. 7, P. 776).

(3) As to the fraction of martensite (as-quenched martensite), after LePera corrosion of the steel sheet, the area ratio of a white contrast regarded as a mixed microstructure of as-quenched martensite and retained austenite was measured, and the retained austenite fraction determined by X-ray diffraction was subtracted therefrom, whereby the martensite fraction was calculated.

The observation results (fraction of each microstructure, and carbon amount in the retained austenite) of the metal microstructure are shown in Tables 8 and 9 below. In addition, the mechanical properties (tensile strength TS, elongation EL and TSxEL) of the press-formed article are shown in Table 10 below.

[Table 8]

| Steel No. | Metal Microstructure of Press-Formed Article | | | | | |
|---|---|---|---|---|---|---|
| | Ferrite Fraction (area%) | Bainitic Ferrite Fraction (area%) | Martensite Fraction (area%) | Retained Austenite Fraction (area %) | Carbon Amount in Retained Austenite (mass%) | Others |
| 1 | 49 | 19 | 25 | 7 | 0.64 | - |
| 2 | 64 | 16 | 12 | 8 | 0.64 | - |
| 3 | 51 | 19 | 30 | 0 | - | - |
| 5 | 53 | 18 | 22 | 7 | 0.62 | - |
| 6 | 7 | 18 | 14 | 6 | 0.64 | tempered martensite: 55% |
| 7 | 55 | 19 | 19 | 7 | 0.63 | - |
| 8 | 48 | 16 | 28 | 8 | 0.63 | - |
| 9 | 48 | 18 | 27 | 7 | 0.64 | - |
| 10 | 48 | 15 | 30 | 7 | 0.64 | - |
| 11 | 0 | 0 | 95 | 5 | 0.52 | - |
| 12 | 85 | 0 | 8 | 7 | 0.52 | - |
| 13 | 72 | 0 | 7 | 1 | 0.48 | pearlite: 20% |
| 14 | 51 | 15 | 27 | 7 | 0.63 | - |
| 15 | 49 | 16 | 26 | 9 | 0.63 | - |

[Table 9]

| Steel No. | Metal Microstructure of Press-Formed Article | | | | | |
|---|---|---|---|---|---|---|
| | Ferrite Fraction (area %) | Bainitic Ferrite Fraction (area%) | Martensite Fraction (area%) | Retained Austenite Fraction (area %) | Carbon Amount in Retained Austenite (mass%) | Others |
| 17 | 8 | 0 | 80 | 12 | 0.75 | - |
| 18 | 62 | 15 | 17 | 6 | 0.68 | - |
| 19 | 52 | 18 | 23 | 7 | 0.61 | - |
| 20 | 45 | 19 | 29 | 7 | 0.63 | - |
| 21 | 46 | 18 | 30 | 6 | 0.45 | - |
| 22 | 51 | 19 | 22 | 8 | 0.64 | - |
| 23 | 48 | 19 | 26 | 7 | 0.65 | - |
| 24 | 46 | 16 | 31 | 7 | 0.63 | - |
| 25 | 51 | 15 | 27 | 7 | 0.63 | - |
| 26 | 46 | 16 | 31 | 7 | 0.62 | - |
| 27 | 46 | 17 | 29 | 8 | 0.62 | - |
| 28 | 49 | 19 | 25 | 7 | 0.63 | - |
| 29 | 51 | 19 | 22 | 8 | 0.64 | - |
| 30 | 52 | 19 | 23 | 6 | 0.63 | - |
| 31 | 51 | 18 | 23 | 8 | 0.62 | |

[Table 10]

| Steel No. | Mechanical Properties of Press-Formed Article | | |
|---|---|---|---|
| | Tensile Strength TS (MPa) | Elongation EL (%) | TS×EL (MPa·%) |
| 1 | 1063 | 19.2 | 20410 |
| 2 | 1024 | 21.1 | 21606 |
| 3 | 981 | 11.5 | 11282 |
| 5 | 1072 | 21.0 | 22512 |
| 6 | 1034 | 24.1 | 24919 |
| 7 | 1052 | 18.0 | 18936 |
| 8 | 1004 | 22.0 | 22088 |
| 9 | 1048 | 21.0 | 22008 |
| 10 | 1044 | 20.9 | 21820 |
| 11 | 1511 | 10.2 | 15412 |
| 12 | 889 | 19.6 | 17424 |
| 13 | 811 | 15.2 | 12327 |
| 14 | 1017 | 22.2 | 22577 |
| 15 | 1068 | 21.7 | 23176 |
| 17 | 1682 | 6.5 | 10933 |
| 18 | 1056 | 21.7 | 22915 |

(continued)

| Steel No. | Mechanical Properties of Press-Formed Article | | |
|---|---|---|---|
| | Tensile Strength TS (MPa) | Elongation EL (%) | TS×EL (MPa·%) |
| 19 | 1075 | 20.5 | 22038 |
| 20 | 1023 | 20.3 | 20767 |
| 21 | 1013 | 16.0 | 16208 |
| 22 | 1046 | 22.1 | 23117 |
| 23 | 1021 | 22.4 | 22870 |
| 24 | 1010 | 21.8 | 22018 |
| 25 | 1026 | 21.6 | 22162 |
| 26 | 1004 | 22.5 | 22590 |
| 27 | 1061 | 21.4 | 22705 |
| 28 | 1063 | 22.0 | 23386 |
| 29 | 1024 | 22.3 | 22835 |
| 30 | 1023 | 21.9 | 22404 |
| 31 | 1031 | 22.0 | 22682 |

These results allow for the following consideration. It is found that in the case of Steel Nos. 1, 2, 5, 8 to 10, 14, 15, 18 to 20, and 22 to 31, which are Examples satisfying the requirements specified in the present invention, a press-formed article having a good strength-ductility balance is obtained.

On the other hand, in the case of Steel Nos. 3, 6, 7, 11 to 13, 17, and 21, which are Comparative Examples failing in satisfying any of the requirements specified in the present invention, any of the properties is deteriorated. More specifically, in the case of Steel No. 3 where a steel sheet for press-forming which has a small Si content is used, the retained austenite fraction is not ensured in the press-formed article and due to low elongation, the strength-elongation balance is deteriorated. In the case of Steel No. 6 where the cooling time in the range from 700°C to 650°C in the manufacture of a steel sheet is insufficient, ferrite transformation does not sufficiently proceeds, failing in ensuring the ferrite fraction in a steel sheet, and it is expected that the strength is increased to make the forming or working before press forming difficult.

In the case of Steel No. 7 where the finish rolling temperature in the manufacture of a steel sheet is high, the steel sheet for press-forming does not satisfy the relationship of the formula (1), and the strength-elongation balance of the press-formed article is deteriorated. In the case of Steel No. 11 where the heating temperature during press forming is high, martensite is produced in a large amount, and ferrite is not produced, and as a result, the strength is increased, and only low elongation EL is obtained (the strength-elongation balance (TS×EL) is also deteriorated).

In the case of Steel No. 12 where the average cooling rate during press forming is low, ferrite is produced in a large amount at the stage of the press-formed article, and strength-elongation balance (TS×EL) is deteriorated. In the case of Steel No. 13 where the rapid cooling finishing temperature during press forming is high, pearlite is produced in a large amount at the stage of the press-formed article, failing in ensuring the retained austenite fraction, and the carbon amount in retained austenite is insufficient, and as a result, not only the strength and elongation are reduced but also the strength-elongation balance (TS×EL) is deteriorated.

In the case of Steel No. 17 where a steel sheet for press-forming which has an excessive C content is used, the ferrite fraction of the steel sheet is decreased, failing in ensuring the ferrite fraction in the press-formed article, and the martensite fraction is increased, and as a result, the strength is high, and only low elongation EL is obtained (the strength-elongation balance (TS×EL) is also deteriorated). In the case of Steel No. 21 where a steel sheet for pres-forming which has an excessive Ti content is used (the carbon amount in retained austenite is insufficient), the elongation and strength-elongation balance (TS×EL) is deteriorated.

[Example 2]

Steel materials (Steel Nos. 32 to 36) having the chemical component composition shown in Table 11 below were melted in vacuum to make an experimental slab, and then it was hot-rolled, followed by cooling and winding (sheet thickness: 3.0 mm). The steel sheet manufacturing conditions here are shown in Table 12 below.

[Table 11]

| Steel No. | Chemical Component Composition* (mass%) | | | | | | | | | | | | | | | Ac₃-20°C (°C) | Ac₁+20°C (°C) | Bs-100°C (°C) | Ms Point (°C) |
|---|---|---|---|---|---|---|---|---|---|---|---|---|---|---|---|---|---|---|---|
| | C | Si | Mn | P | S | Al | B | Ti | N | V | Nb | Cu | Ni | Cr | Mo | | | | |
| 32 | 0.220 | 1.20 | 1.20 | 0.0050 | 0.0020 | 0.030 | 0.0020 | 0.044 | 0.0040 | - | - | - | - | 0.20 | - | 843 | 768 | 549 | 421 |
| 33 | 0.350 | 1.20 | 1.20 | 0.0050 | 0.0020 | 0.030 | 0.0020 | 0.044 | 0.0040 | - | - | - | - | 0.20 | - | 818 | 768 | 514 | 374 |
| 34 | 0.220 | 1.20 | 1.20 | 0.0050 | 0.0020 | 0.030 | 0.0020 | 0.044 | 0.0040 | - | - | - | - | 0.20 | - | 843 | 768 | 549 | 421 |
| 35 | 0.220 | 1.20 | 1.20 | 0.0050 | 0.0020 | 0.030 | 0.0020 | 0.044 | 0.0040 | - | - | - | - | - | - | 845 | 765 | 563 | 425 |
| 36 | 0.220 | 1.20 | 1.20 | 0.0050 | 0.0020 | 0.030 | 0.0020 | 0.044 | 0.0040 | - | - | - | - | 0.20 | - | 843 | 768 | 549 | 421 |

*Remainder: Iron and unavoidable impurities except for P, S and N.

[Table 12]

| Steel No. | Steel Sheet Manufacturing Conditions | | | | |
|---|---|---|---|---|---|
| | Heating Temperature (°C) | Finish Rolling Temperature (°C) | Cooling Time from 700 to 620°C (sec) | Winding Temperature (°C) | Remarks |
| 32 | 1200 | 800 | 12 | 500 | - |
| 33 | 1200 | 800 | 12 | 500 | - |
| 34 | 1200 | 800 | 12 | 500 | treatment (1) |
| 35 | 1200 | 800 | 12 | 500 | - |
| 36 | 1200 | 800 | 12 | 500 | - |

With respect to the steel sheets (steel sheets for press-forming) obtained, analysis of the precipitation state of Ti precipitates, observation of the metal microstructure (the fraction of each microstructure), and measurement of the tensile strength were performed in the same manner as in Example 1. The results are shown in Table 13 below.

[Table 13]

| Steel No. | Steel Sheet for Press-Forming | | | | | |
|---|---|---|---|---|---|---|
| | Precipitated Ti Amount -3.4 [N] (mass%) | 0.5×[Total Ti Amount-3.4 [N] (mass%) | Average Equivalent-Circle Diameter of Ti-Containing Precipitates (nm) | Ferrite Fraction (area%) | Remainder Microstructure* | Tensile Strength (MPa) |
| 33 | 0.028 | 0.015 | 10.9 | 52 | B | 735 |
| 34 | 0.025 | 0.015 | 10.5 | 56 | B | 830 |
| 35 | 0.025 | 0.015 | 10.8 | 60 | B | 702 |
| 36 | 0.026 | 0.015 | 10.9 | 52 | B | 735 |
| 37 | 0.023 | 0.015 | 11.0 | 52 | B | 740 |
| *B: Bainitic ferrite. | | | | | | |

Each of the steel sheets above (3.0 mm$^t$×150 mm×200 mm) was heated at a predetermined temperature in a heating furnace and then subjected to press forming and cooling treatment in a hat-shaped mold (FIG. 1) to obtain a formed article. At this time, the steel sheet was placed in an infrared furnace, and a temperature difference was created by applying an infrared ray directly to a portion intended to have high strength (the steel sheet portion corresponding to the first region) so that the portion could be heated at a high temperature, and by putting a cover on a portion intended to have low strength (the steel sheet portion corresponding to the second region) so that the portion could be heated at a low temperature by blocking part of the infrared ray. Accordingly, the press-formed article has regions differing in the strength in a single component. The press forming conditions (heating temperature, average cooling rate, and rapid cooling finishing temperature of each region during press forming) are shown in Table 14 below.

[Table 14]

| Steel No. | Region | Press Forming Conditions | | |
|---|---|---|---|---|
| | | Heating Temperature (°C) | Average Cooling Rate (°C/sec) | Rapid Cooling Finishing Temperature (°C) |
| 32 | low strength side | 790 | 40 | 300 |
| | high strength side | 920 | 40 | 300 |
| 33 | low strength side | 800 | 40 | 300 |
| | high strength side | 920 | 40 | 300 |
| 34 | low strength side | 810 | 40 | 300 |
| | high strength side | 920 | 40 | 300 |
| 35 | low strength side | 800 | 40 | 300 |
| | high strength side | 920 | 40 | 300 |
| 36 | low strength side | 800 | 40 | 300 |
| | high strength side | 850 | 40 | 300 |

With respect to the press-formed articles obtained, the tensile strength (TS), elongation (total elongation EL), observation of metal microstructure (fraction of each microstructure), and measurement of carbon amount in the retained austenite, in each region, were determined in the same manner as in Example 1.

The observation results (fraction of each microstructure) of the metal microstructure and the carbon amount in the retained austenite are shown in Table 15 below. In addition, the mechanical properties (tensile strength TS, elongation EL and TS×EL) of the press-formed article are shown in Table 16 below. Here, the test piece was rated "passed" when a tensile strength (TS) of 1,470 MPa or more and an elongation (EL) of 8% or more were satisfied on the high strength side and the strength-elongation balance (TS×EL) was 14,000 (MPa·%) or more (the evaluation criteria of the low strength side are the same as in Example 1).

[Table 15]

| Steel No. | Region | Metal Microstructure of Press-Formed Article | | | | | |
|---|---|---|---|---|---|---|---|
| | | Ferrite Fraction (area %) | Bainitic Ferrite Fraction (area%) | Martensite Fraction (area%) | Retained Austenite Fraction (area %) | Carbon Amount in Retained Austenite (mass%) | Others |
| 32 | low strength side | 54 | 18 | 21 | 7 | 0.63 | - |
| | high strength side | 0 | 0 | 94 | 6 | 0.52 | - |

(continued)

| Steel No. | Region | Metal Microstructure of Press-Formed Article | | | | | |
|---|---|---|---|---|---|---|---|
| | | Ferrite Fraction (area %) | Bainitic Ferrite Fraction (area%) | Martensite Fraction (area%) | Retained Austenite Fraction (area %) | Carbon Amount in Retained Austenite (mass%) | Others |
| 33 | low strength side | 50 | 19 | 25 | 6 | 0.63 | - |
| | high strength side | 0 | 0 | 95 | 5 | 0.53 | - |
| 34 | low strength side | 54 | 18 | 23 | 8 | 0.64 | - |
| | high strength side | 0 | 0 | 94 | 6 | 0.55 | - |
| 35 | low strength side | 50 | 18 | 25 | 7 | 0.63 | - |
| | high strength side | 0 | 0 | 94 | 6 | 0.53 | - |
| 36 | low strength side | 50 | 18 | 39 | 7 | 0.63 | - |
| | high strength side | 25 | 0 | 69 | 6 | 0.55 | - |

[Table 16]

| Steel No. | Region | Mechanical Properties of Press-Formed Article | | |
|---|---|---|---|---|
| | | Tensile Strength TS (MPa) | Elongation EL (%) | TS×EL(MPa·%) |
| 32 | low strength side | 1038 | 21.6 | 22421 |
| | high strength side | 1511 | 12.3 | 18585 |
| 33 | low strength side | 1192 | 18.7 | 22290 |
| | high strength side | 1820 | 11.3 | 20566 |
| 34 | low strength side | 1057 | 21.3 | 22514 |
| | high strength side | 1499 | 12.0 | 17988 |
| 35 | low strength side | 1035 | 21.0 | 21735 |
| | high strength side | 1520 | 11.5 | 17480 |
| 36 | low strength side | 1052 | 20.5 | 21566 |
| | high strength side | 1288 | 12.3 | 15842 |

These results allow for the following consideration. It is found that in the case of Steel Nos. 32 to 35, which are Examples satisfying the requirements specified in the present invention, a component having a good strength-ductility balance in each region is obtained. On the other hand, in the case of Steel No. 36 where the heating temperature during press forming is low, the ferrite fraction on the high strength side is low, and the martensite fraction on the high strength side is high (the difference in the strength from the low strength side is less than 300 MPa).

INDUSTRIAL APPLICABILITY

In the present invention, the steel sheet has a predetermined chemical component composition, the average equivalent-circle diameter of Ti-containing precipitates having an equivalent-circle diameter of 30 nm or less among Ti-containing precipitates contained in the steel sheet is 3 nm or more, the precipitated Ti amount and the total Ti amount in the steel satisfy a predetermined relationship, and the ferrite fraction in the metal microstructure is 30 area% or more, whereby there can be realized a steel sheet for hot-pressing which is useful to obtain a press-formed article ensuring that forming or working before hot pressing is facilitated, a press-formed article capable of achieving a high-level balance between high strength and elongation when uniform properties are required in the formed article can be obtained, and the press-formed article can achieve a high-level balance between high strength and elongation according to respective regions when regions corresponding to an impact resistant site and an energy absorption site are required in a single formed article.

DESCRIPTION OF REFERENCE NUMERALS AND SIGNS

1: Punch

2: Die

3: Blank holder

4: Steel sheet (blank)

**Claims**

1. A method for manufacturing a press-formed article, wherein a steel sheet for hot-pressing is used, a heating region of the steel sheet is divided into at least two regions, one region of them is heated at a temperature of $Ac_3$ transformation point or more and 950°C or less, another region of them is heated at a temperature equal to or more than $Ac_1$ transformation point+20°C and equal to or less than $Ac_3$ transformation point-20°C, and then press forming of both regions is started, and the steel sheet is cooled to a temperature equal to or less than a martensite transformation starting temperature Ms while ensuring an average cooling rate of 20°C/sec or more in a mold in both of the regions during forming and after a completion of forming, wherein the steel sheet for hot-pressing consists of:

C: from 0.15 to 0.5% (mass%; hereinafter, the same applies to the chemical component composition),
Si: from 0.2 to 3%,
Mn: from 0.5 to 3%,
P: 0.05% or less (exclusive of 0%),
S: 0.05% or less (exclusive of 0%),
Al: from 0.01 to 1%,
B: from 0.0002 to 0.01 %,
Ti: equal to or more than 3.4[N] +0.02 % and equal to or less than 3.4[N]+0.1 % (wherein [N] indicates a content (mass%) ofN),
N: from 0.001 to 0.01%, and
Optionally at least one of the following (a) to (c):

(a) one or more kinds selected from the group consisting of V, Nb and Zr, in an amount of 0.1% or less in total;
(b) one or more kinds selected from the group consisting of Cu, Ni, Cr and Mo, in an amount of 1% or less in total; and
(c) one or more kinds selected from the group consisting of Mg, Ca and REM, in an amount of 0.01% or less in total,

with the remainder being iron and unavoidable impurities,
wherein an average equivalent-circle diameter of a Ti-containing precipitate having an equivalent-circle diameter of 30 nm or less among Ti-containing precipitates contained in the steel sheet is 3 nm or more, a precipitated Ti amount and a total Ti amount in a steel satisfy a relationship of the following formula (1), and a ferrite fraction in a metal microstructure is 30 area% or more:

$$\text{Precipitated Ti amount (mass\%)} - 3.4[N] \geq 0.5 \times [(\text{total Ti amount (mass\%)}) - 3.4[N]] \cdots (1)$$

(in the formula (1), [N] indicates the content (mass%) of N in the steel).

2.  A press-formed article of a steel sheet having a chemical component composition consisting of:

    C: from 0.15 to 0.5% (mass%; hereinafter, the same applies to the chemical component composition),
    Si: from 0.2 to 3%,
    Mn: from 0.5 to 3%,
    P: 0.05% or less (exclusive of 0%),
    S: 0.05% or less (exclusive of 0%),
    Al: from 0.01 to 1%,
    B: from 0.0002 to 0.01%,
    Ti: equal to or more than 3.4[N]+0.02% and equal to or less than 3.4[N]+0.1 % (wherein [N] indicates a content (mass%) of N),
    N: from 0.001 to 0.01 %, and
    Optionally at least one of the following (a) to (c):

    (a) one or more kinds selected from the group consisting of V, Nb and Zr, in an amount of 0.1% or less in total;
    (b) one or more kinds selected from the group consisting of Cu, Ni, Cr and Mo, in an amount of 1% or less in total; and
    (c) one or more kinds selected from the group consisting of Mg, Ca and REM, in an amount of 0.01% or less in total,

    with the remainder being iron and unavoidable impurities,
    wherein the press-formed article has a first region having a metal microstructure including retained austenite: from 3 to 20 area% and martensite: 80 area% or more and a second region having a metal microstructure including retained austenite: from 3 to 20 area%, ferrite: from 30 to 80 area%, bainitic ferrite: less than 30 area% (exclusive of 0 area%), and martensite: 31 area% or less (exclusive of 0 area%), and a carbon amount in the retained austenite is from 0.50% to 1.0%.

## Patentansprüche

1.  Verfahren zur Herstellung eines pressgeformten Gegenstands, wobei ein Stahlblech zur Heisspressung verwendet wird, ein Erwärmungsbereich des Stahlblechs in mindestens zwei Bereiche aufgeteilt ist, ein Bereich von diesen bei einer Temperatur des $Ac_3$ Umwandlungspunkts oder höher und 950°C oder niedriger erwärmt wird, ein anderer Bereich von diesen bei einer Temperatur gleich oder höher als der $Ac_1$ Umwandlungspunkt+20°C und gleich oder niedriger als der $Ac_3$ Umwandlungspunkt-20°C erwärmt wird, und dann Pressformung der beiden Bereiche begonnen wird, und das Stahlblech auf eine Temperatur gleich der oder weniger als eine Martensiteumwandlungsanfangstemperatur Ms gekühlt wird, während eine durchschnittliche Abkühlungsgeschwindigkeit von 20°C/sec oder mehr in einer Form in beiden der Bereiche während des Formens und nach einer Vollendung des Formens gewährleistet wird,
    wobei das Stahlblech zur Heisspressung aus:

    C: von 0.15 bis 0.5% (Massen%; nachfolgend gilt das Gleiche für die Zusammensetzung der chemischen Bestandteile)
    Si: von 0.2 bis 3%,
    Mn: von 0.5 bis 3%,

P: 0.05% oder weniger (ausschließend 0%),
S: 0.05% oder weniger (ausschließend 0%),
Al: von 0.01 bis 1%,
B: von 0.0002 bis 0.01%,
Ti: gleich oder mehr als 3.4[N]+0.02% und gleich oder weniger als 3.4[N]+0.1% (wobei [N] einen Gehalt (Massen%) von N bezeichnet),
N: von 0.001 bis 0.01%, und
gegebenenfalls mindestens einem der nachstehenden (a) bis (c):

(a) eine oder mehrere Arten, ausgewählt aus der Gruppe, bestehend aus V, Nb und Zr, in einer Gesamtmenge von 0.1 % oder weniger;
(b) eine oder mehrere Arten, ausgewählt aus der Gruppe, bestehend aus Cu, Ni, Cr und Mo, in einer Gesamtmenge von 1% oder weniger; und
(c) eine oder mehrere Arten, ausgewählt aus der Gruppe, bestehend aus Mg, Ca und REM, in einer Gesamtmenge von 0.01 % oder weniger besteht,

wobei der Rest Eisen und unvermeidbare Verunreinigungen sind,
wobei ein durchschnittlicher Äquivalenzkreisdurchmesser einer Ti enthaltenden Abscheidung, die einen durchschnittlichen Äquivalenzkreisdurchmesser von 30 nm oder weniger aufweist, unter Ti enthaltenden Abscheidungen, die in dem Stahlblech enthalten sind, 3 nm oder mehr beträgt, eine abgeschiedene Ti Menge und eine Ti Gesamtmenge in einem Stahl einem Verhältnis der nachstehenden Formel (1) genügt und eine Ferritfraktion in einer Metallmikrostruktur 30 Flächen% oder mehr beträgt:

$$\text{abgeschiedene Ti Menge (Massen\%)}-3.4[N] \geq 0.5\times[(\text{Ti Gesamtmenge (Massen\%)})-3.4[N]] \cdots (1)$$

(in der Formel (1) bezeichnet [N] den Gehalt (Massen%) von N in dem Stahl).

2. Pressgeformter Gegenstand eines Stahlblechs, aufweisend eine Zusammensetzung der chemischen Bestandteile, bestehend aus:

C: von 0.15 bis 0.5% (Massen%; nachfolgend gilt das Gleiche für die Zusammensetzung der chemischen Bestandteile),
Si: von 0.2 bis 3%,
Mn: von 0.5 bis 3%,
P: 0.05% oder weniger (ausschließend 0%),
S: 0.05% oder weniger (ausschließend 0%),
Al: von 0.01 bis 1%,
B: von 0.0002 bis 0.01%,
Ti: gleich oder mehr als 3.4[N]+0.02% und gleich oder weniger als 3.4[N]+0.1% (wobei [N] einen Gehalt (Massen%) von N bezeichnet),
N: von 0.001 bis 0.01%, und
gegebenenfalls mindestens einem der nachstehenden (a) bis (c):

(a) eine oder mehrere Arten, ausgewählt aus der Gruppe, bestehend aus V, Nb und Zr, in einer Gesamtmenge von 0.1 % oder weniger;
(b) eine oder mehrere Arten, ausgewählt aus der Gruppe, bestehend aus Cu, Ni, Cr und Mo, in einer Gesamtmenge von 1% oder weniger; und
(c) eine oder mehrere Arten, ausgewählt aus der Gruppe, bestehend aus Mg, Ca und REM, in einer Gesamtmenge von 0.01 % oder weniger,

wobei der Rest Eisen und unvermeidbare Verunreinigungen sind,
wobei der pressgeformte Gegenstand einen ersten Bereich, aufweisend eine Metallmikrostruktur, einschließend Restaustenit: von 3 bis 20 Flächen% und Martensit: 80 Flächen% oder mehr und einen zweiten Bereich, aufweisend eine Metallmikrostruktur, einschließend Restaustenit: von 3 bis 20 Flächen%, Ferrit: von 30 bis 80 Flächen%, bainitisches Ferrit: weniger als 30 Flächen% (ausschließend 0 Flächen%), und Martensit: 31 Flächen% oder weniger (ausschließend 0 Flächen%) aufweist und eine Kohlenstoffmenge in dem Restaustenit von 0.50% bis 1.0% beträgt.

**Revendications**

1. Procédé de fabrication d'un article formé par pressage comprenant, dans lequel une tôle d'acier pour pressage à chaud est utilisée, une région de chauffage de la tôle d'acier est divisée en au moins deux régions, une des régions est chauffée à une température allant du point de transformation $Ac_3$ ou plus jusqu'à 950°C ou moins, l'autre région est chauffée à une température supérieure ou égale au point de transformation $Ac_1$+20°C et inférieure ou égale au point de transformation $Ac_3$-20°C, et ensuite le formage par presse des deux régions est débuté, et la tôle d'acier est refroidie à une température inférieure ou égale à la température de début de transformation du martensite Ms tout en fournissant une vitesse moyenne de refroidissement de 20°C/s ou plus dans un moule dans les deux régions durant le formage et après l'achèvement du formage,
dans lequel la tôle d'acier pour pressage à chaud consiste en :

C : 0,15-0,5% signifie en %massique, ci-après de même par rapport à la composition chimique ;
Si : 0,2-3% ;
Mn : 0,5-3% ;
P : 0,05% ou moins (excluant 0%) ;
S : 0,05% ou moins (excluant 0%) ;
Al : 0,01-1% ;
B : 0,0002-0,01% ;
Ti : supérieure ou égale à 3,4[N]+0,02% et inférieure ou égale à 3,4[N]+0,01% (où [N] indique la quantité (%massique) de N) ; et
N : 0,001-0,01%, et
optionnellement au moins un parmi (a) jusqu'à (c) :

(a) un ou plusieurs matériaux sélectionnés parmi le groupe consistant en V, Nb et Zr dans une quantité totale de 0,1% ou moins;
(b) un ou plusieurs matériaux sélectionnés parmi le groupe consistant en Cu, Ni, Cr et Mo dans une quantité totale de 1% ou moins;
(c) un ou plusieurs matériaux sélectionnés parmi le groupe consistant en Mg, Ca et métal terre rare dans une quantité totale de 0,01% ou moins,

le reste consistant en du fer et d'inévitables impuretés,

dans lequel
un diamètre de cercle équivalent de précipités comprenant du Ti ayant un diamètre de cercle équivalent de 30nm ou moins parmi les précipités comprenant du Ti dans la tôle d'acier est de 3nm ou plus, la quantité de Ti précipité et la quantité totale de Ti dans l'acier remplissant la relation de la formule suivante (1), et une fraction de ferrite dans une microstructure métallique est de 30%surfacique ou plus;

$$\text{Quantité de Ti précipité (\%massique)} - 3,4[N] \geq 0,5 \times [\text{quantité totale de Ti (\%massique)} - 3,4[N]] \qquad (1)$$

(dans la formule (1), [N] représente la quantité (%massique) de N dans l'acier).

2. Article formé par pressage d'une tôle d'acier ayant une composition chimique consistant en;

C : 0,15-0,5% signifie en %massique, ci-après de même par rapport à la composition chimique ;
Si : 0,2-3% ;
Mn : 0,5-3% ;
P : 0,05% ou moins (excluant 0%) ;
S : 0,05% ou moins (excluant 0%) ;
Al : 0,01-1% ;
B : 0,0002-0,01 % ;
Ti : supérieure ou égale à 3,4[N]+0,02% et inférieure ou égale à 3,4[N]+0,01% (où [N] indique la quantité (%massique) de N) ; et

N : 0,001-0,01%, et

optionnellement au moins un parmi (a) jusqu'à (c) :

(a) un ou plusieurs matériaux sélectionnés parmi le groupe consistant en V, Nb et Zr dans une quantité totale de 0,1% ou moins;

(b) un ou plusieurs matériaux sélectionnés parmi le groupe consistant en Cu, Ni, Cr et Mo dans une quantité totale de 1% ou moins;

(c) un ou plusieurs matériaux sélectionnés parmi le groupe consistant en Mg, Ca et un métal terre rare dans une quantité totale de 0,01% ou moins,

le reste consistant en du fer et d'inévitables impuretés,

où l'article formé par pressage a une première région ayant une microstructure métallique austénite de trempe : de 3 à 20%surfacique et martensite : de 80 à 97%surfacique, et une seconde région ayant une microstructure métallique comprenant austénite de trempe : de 3 à 20%surfacique, ferrite : de 30 à 80%surfacique, ferrite bainitique : moins de 30%surfacique (excluant 0%surfacique) et la quantité de carbone dans l'austénite de trempe est de 0,50% à 1,0%.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010065292 A
- JP 2010065293 A
- JP 2010065294 A
- JP 2010065295 A
- WO 2012169639 A
- WO 2012169640 A

**Non-patent literature cited in the description**

- **LESLIE.** The Physical Metallurgy of Steels. Maruzen, 1985
- *ISJJ Int.,* 1933, vol. 33 (7), 776